# FASCICULE DE BREVET EUROPEEN

(11) **EP 4 227 077 B1**
(45) Date de publication et mention de la délivrance du brevet: **08.01.2025**
(21) Numéro de dépôt: 22156544.3
(22) Date de dépôt: 14.02.2022
(51) Int. Cl.: B29D 99/00, B29C 70/48, B29C 33/04, B29C 33/30, B29C 33/00, B29L 31/30

(54) **MOULE POUR PANNEAU INCURVE**
FORM FÜR GEBOGENES PANEEL
MOULD FOR CURVED PANEL

(43) Date de publication de la demande: 16.08.2023
(73) Titulaire: Coexpair, 5020 Namur (BE)
(72) Inventeur: BERTIN, André, Vedrin (BE)
(74) Mandataire: Gevers Patents

(56) Documents cités:
- CA-A1- 2 487 697

## Description

### Domaine technique

La présente invention concerne un moule pour mouler et polymériser sous pression un panneau en matériau composite qui soit incurvé et de grande dimension.

### Art antérieur

Un matériau composite comprend un ou plusieurs renfort(s) imprégné(s) d'une résine polymérisée.

Un moule connu permettant de mouler un panneau incurvé de grande dimension en matériau composite, par exemple un panneau de voilure pour aile d'aéronef, comprend une surface de moulage d'une part et un sac ou membrane à vide d'autre part. La pression exercée pour le moulage est dans certain cas la pression atmosphérique, via la mise sous vide entre le moule et le sac ou membrane, soit dans d'autre cas est augmentée grâce à un autoclave, typiquement entre 6 et 8 bars. Une pression de 6 à 8 bars est habituellement nécessaire pour limiter la porosité du composite à des valeurs acceptable, typiquement sous 2% du volume. Le moule est chauffé pour polymériser la résine du matériau composite, typiquement à 180°C. La vitesse de chauffe permise est en général de 3°C/minute mais elle est le plus souvent limitée à 1°C/minute pour la cuisson en autoclave afin de conserver une homogénéité thermique sur l'ensemble du moule et de la pièce à produire. On vise typiquement une homogénéité de +/- 5°C sur l'ensemble.

Le plus souvent la résine est soit déjà présente dans le renfort lors de la fermeture du moule par le sac ou la membrane à vide, soit elle y est injectée après la mise sous vide. Dans certain cas la résine est partiellement présente lors de la mise sous vide et un complément est injecté.

En outre, si la pièce intègre des éléments en saillie, par exemple des raidisseurs, ceux-ci sont en général formés vers le haut, à l'opposé de la surface de moulage, par un dispositif externe localisé sous le sac à vide dont le positionnement par rapport à la surface de moulage est difficile.

Une alternative à la cuisson sous pression et température, dans un autoclave, sur un moule simple face refermé par un sac à vide, est un procédé nommé SQRTM - Same Qualified Resin Transfer Moulding -, qui est connu pour permettre une cuisson sous pression et température dans un moule male/femelle, double face. Ce procédé SQRTM permet de reproduire les niveaux de pression et de température d'un procédé par autoclave. Le SQRTM permet de produire un composite d'une qualité au moins équivalente à celle d'un composite produit en autoclave.

De nombreux procédés existent pour injecter de la résine lors du moulage d'un panneau composite. Le procédé est généralement nommé RTM - Resin Transfer Moulding et est décliné selon de nombreuses variations selon qu'il est fait appel au vide, à une pression extérieure sur le moule, à un moule simple face avec sac à vide ou à un moule male/femelle, selon le moment ou le moule est complètement fermé. Des pièces de meilleure qualité sont généralement obtenues dans des moules male/femelle où le vide est appliqué avant une injection sous pression.

L'utilisation d'un autoclave pour appliquer une pression de fermeture sur un moule et le chauffer est connue pour être un procédé peu efficace énergétiquement (il nécessite de chauffer un gaz qui chauffe un moule par convection) et consommateur de matériaux accessoires tels que les sacs à vide qui sont jetés après chaque utilisation ou de membranes qui sont jetées après quelques utilisation.

Dans le cas d'un panneau de voilure d'aéronef, le renfort du matériau composite est de la fibre de carbone, la résine est le plus souvent un époxy. La particularité de la fibre de carbone est qu'elle se dilate très peu lors du cycle de moulage, entre 20°C et 180°C. Il est commun de mouler les pièces de grande dimension sur des moules simple face réalisés dans des matériaux dont la dilatation thermique est proche de celle de la fibre de carbone tel que l'acier Invar ou un composite à base de fibre de carbone. L'invar est un matériau coûteux. Un composite à base de fibre de carbone est relativement fragile comme matériaux pour un moule. Il a été montré que lors du moulage par SQRTM ou RTM de pièce de grandes dimensions, en moule male/femelle, sous pression et température, que l'on peut s'affranchir de l'utilisation d'un matériau de moule dont le coefficient de dilatation soit proche de celui de la fibre de carbone. Typiquement des moules en aluminium ou en acier sont utilisés.

Le document CA2487697A1 décrit une méthode de moulage d'une pièce à paroi mince à partir d'un matériau en résine durcissable, consistant à faire en sorte que des parties réglables s'engagent et soutiennent les têtes d'engagement de supports mécaniques aux endroits voulus.

### Résumé de l'invention

Un objet de la présente invention est de fournir un moule pour une pièce de type panneau en matériau composite, incurvé et de grande dimension, polymérisé sous pression et en température. Ce moule permettant un excellent contrôle de l'épaisseur du panneau et de la position d'éventuels éléments en saillie. Ce moule permettant également d'être fabriqué en matériaux dont le coefficient de dilation est notablement différent de celui du renfort de la pièce composite, par exemple en acier ou en aluminium pour un renfort en fibre de carbone. Le moule selon l'invention permet de fabriquer des pièces de grande qualité à une cadence intéressante.

A cet effet, l'invention propose un moule pour mouler au moins une partie d'une pièce incurvée, la pièce ayant une première surface de pièce et une deuxième surface de pièce séparées par une épaisseur, le moule comprenant:
- une coquille comprenant :
   ∘ une première partie comprenant une première surface de moulage pour mouler la première surface de pièce, et une première surface extérieure opposée à la première surface de moulage,
   ∘ une deuxième partie comprenant une deuxième surface de moulage pour mouler la deuxième surface de pièce, et une deuxième surface extérieure opposée à la deuxième surface de moulage, au moins l'une des première et deuxième surfaces extérieures étant non-plane ;
- un système d'appui comprenant :
   ∘ un premier dispositif d'appui couplé mécaniquement à la première partie de la coquille et configuré pour presser sur la première partie de la coquille selon une première direction, et
   ∘ un deuxième dispositif d'appui couplé mécaniquement à la deuxième partie de la coquille et configuré pour presser sur la deuxième partie de la coquille selon la première direction ;
   le moule étant configuré pour permettre, entre la première partie de la coquille et le premier dispositif d'appui, et entre la deuxième partie de la coquille et le deuxième dispositif d'appui, un glissement dans au moins une direction perpendiculaire à la première direction.

Dans le moule selon l'invention, chacune des première et deuxième surfaces de la pièce est définie par une des surfaces de moulage, et l'épaisseur de la pièce est définie par la distance entre les surfaces de moulage du moule. Le moule est préférentiellement tel que le glissement est possible dans toute direction perpendiculaire à la première direction.

Puisque la première partie de la coquille glisse par rapport au premier dispositif d'appui et la deuxième partie de la coquille glisse par rapport au deuxième dispositif d'appui dans au moins une direction perpendiculaire à la première direction, la contrainte exercée par les dispositifs d'appui sur les surfaces de moulage est uniquement selon la première direction. Cela permet de reprendre la pression selon la première direction tout en laissant libre le mouvement selon au moins une direction perpendiculaire. Ainsi, lorsque lors du moulage, la température des surfaces de moulage augmentent et qu'elles se dilatent, les surfaces de moulage ont la liberté de s'étendre perpendiculairement à la première direction alors qu'elles sont contraintes selon la première direction. Par conséquent, la dilatation thermique des surfaces de moulage résulte principalement en une déformation perpendiculaire à la première direction, et l'épaisseur de la pièce, c'est-à-dire son extension selon la première direction, est extrêmement bien contrôlée malgré la dilatation thermique grâce à la pression selon la première direction. Par exemple, si la première direction est verticale, on peut considérer que la coquille glisse horizontalement entre des dispositifs d'appui qui restent fixes horizontalement. Par conséquent la dilatation thermique des surfaces de moulage résulte principalement en une augmentation de l'écart entre les dispositifs d'appui, cet écart (et donc l'épaisseur de la pièce) est extrêmement bien contrôlée grâce à la pression exercée par un dispositif de serrage sur le système d'appui. Lors du moulage, l'épaisseur de la pièce est ainsi contrôlée par le pressage selon la première direction.

Lors d'un moulage, la résine injectée exerce une pression tendant à faire s'écarter les première et deuxième parties de la coquille. Avec le moule selon l'invention, cette pression vers l'extérieur est principalement contrecarrée par un dispositif de serrage qui exerce une pression vers l'intérieur par l'intermédiaire du système d'appui. L'équilibre entre pressions vers l'extérieur et vers l'intérieur permet d'obtenir l'épaisseur de pièce désirée.

Le moulage est réalisé à une température entre 120°C et 180°C sous une pression de 5 à 10 bars. Typiquement, le niveau de vide à l'intérieur de la coquille est de moins de 10 mbar.

Le moule est configuré pour que le couplage mécanique entre le premier dispositif d'appui et la première partie de la coquille transmette une pression selon la première direction depuis le premier dispositif d'appui vers la première partie de la coquille, et pour que couplage mécanique entre le deuxième dispositif d'appui et la deuxième partie de la coquille transmette une pression selon la première direction depuis le deuxième dispositif d'appui vers la deuxième partie de la coquille.

Le transfert de pression et le glissement entre la première partie de la coquille et le premier dispositif d'appui se produisent sur une pluralité de premières zones de glissement, et le transfert de pression et le glissement entre la deuxième partie de la coquille et le deuxième dispositif d'appui se produisent sur une pluralité de deuxièmes zones de glissement.

De préférence, la pression n'est mise que sur une portion des surfaces extérieures de la première partie de la coquille, et de la deuxième partie de la coquille, cette portion représentant moins de 20% de la surface extérieure. Autrement dit, les premières zones de glissement représentent moins de 20% de la surface extérieure et les deuxièmes zones de glissement représentent moins de 20% de la surface extérieure. Cela permet d'obtenir un moule particulièrement léger.

La coquille est prévue pour que sa première partie et sa deuxième partie ne glissent pas, ou peu, l'une par rapport à l'autre lors du moulage. La première partie de la coquille est préférentiellement une partie femelle et la deuxième partie est préférentiellement une partie male. Cependant, le contraire est possible tout en restant dans le cadre de l'invention.

La non-planarité des surfaces extérieures permet que celles-ci suivent, au moins partiellement, la forme incurvée de la pièce moulée, ou de la partie moulée de la pièce. Cela permet que la coquille soit particulièrement légère et donc particulièrement aisée à chauffer. De même pour la non-coplanarité des zones de glissement.

Le moulage par SQRTM ou RTM en moule double face comme la coquille de l'invention, sous pression et température permet de s'affranchir de l'utilisation d'un autoclave. Un bénéfice est que l'épaisseur de la pièce est mieux contrôlée que dans un autoclave parce qu'elle est définie par l'entrefer du moule et non par la pression exercée par l'autoclave pour limiter la porosité. Grâce au système d'appui, le moule double face selon l'invention est suffisamment raide pour que l'entrefer ne varie pas excessivement en réaction à la pression exercée à l'intérieur du moule. Une autre façon d'obtenir une raideur suffisante serait d'utiliser une coquille raide en tant que telle, mais une telle coquille est particulièrement massive, ce qui augmente l'énergie requise par son chauffage.

La première direction est préférentiellement telle qu'elle reprend la majorité de la pression exercée par le renfort et la résine sur l'intérieur du moule lors du moulage.

La première direction est préférentiellement verticale, mais elle pourrait être quelconque (par exemple horizontale) tout en restant dans le cadre de l'invention. La pièce s'étend principalement selon les deuxième et troisième directions et son épaisseur s'étend principalement selon la première direction.

La pièce comprend de préférence un panneau. Le moule selon l'invention est particulièrement adapté pour des pièces qui sont ou qui comprennent des panneaux d'au moins 1 m², par exemple d'au moins 10 m². Elle peut avoir une longueur, mesurée selon la deuxième direction, d'au moins 5 m, par exemple au moins 12 m. Elle peut avoir une largeur, mesurée selon la troisième direction, d'au moins 1 m, par exemple au moins 2 m.

La pièce est incurvée. Elle peut par exemple avoir un point de courbure négatif, ce qui indique une géométrie en « selle de cheval ». Le creux dans la pièce peut avoir une profondeur d'au moins 30 cm, par exemple au moins 80 cm.

Les dispositifs d'appui peuvent être par exemple en acier ou en fibre de carbone. La fibre de carbone permet de réduire la masse et la dilatation thermique.

Les premières et deuxièmes zones de glissement comprennent préférentiellement un ou des matériau(x) tel(s) que le coefficient de friction statique, µₛ, est inférieur à 0,5 pour le glissement entre la première partie de la coquille et le premier dispositif d'appui, et entre la deuxième partie de la coquille et le deuxième dispositif d'appui.

Selon un mode de réalisation, le couplage mécanique entre la première surface extérieure et le premier dispositif d'appui comprend des protubérances s'étendant à partir de la première surface extérieure vers le premier dispositif d'appui et/ou des protubérances s'étendant à partir du premier dispositif d'appui vers la première surface extérieure; et le couplage mécanique entre la deuxième surface extérieure et le deuxième dispositif d'appui comprend des protubérances s'étendant à partir de la deuxième surface extérieure vers le deuxième dispositif d'appui et/ou des protubérances s'étendant à partir du deuxième dispositif d'appui vers la deuxième surface extérieure. Ainsi, le contact entre les dispositifs d'appui et les première et deuxième parties de la coquille ne s'étend pas sur toute la surface de la coquille. Cela permet que le moule soit particulièrement léger. La pression selon la première direction est transmise via les protubérances.

Selon un mode de réalisation, au moins certaines des protubérances comprennent des arêtes. Cela permet un transfert de pression particulièrement homogène. Les arêtes forment les lignes de contact entre la coquille et le système d'appui. En outre, les protubérances en forme d'arête des surfaces extérieures permettent de raidir la coquille. Cependant, il est possible, tout en restant dans le cadre de l'invention, qu'au moins certaines des protubérances aient une autre forme, par exemple des tiges ou des poteaux.

Selon un mode de réalisation, le moule comprend des éléments de chauffage fixés à la première surface extérieure, et/ou à la deuxième surface extérieure, et/ou au système d'appui, et situés entre des protubérances. Les éléments de chauffage peuvent être par exemple des résistances électriques ou des inducteurs magnétiques induisant des courants de Foucault dans la coquille. La disposition des éléments de chauffage au plus près des surfaces extérieures de la coquille permet de consommer particulièrement peu d'énergie puisque le transfert thermique est particulièrement efficace.

Dans un mode de réalisation de l'invention, le système d'appui comprend des passages configurés pour faire passer un fluide caloporteur. Le fluide peut par exemple être un gaz, notamment de l'air, passant dans des trous de parois formant les protubérances. Le refroidissement peut être passif ou par convection forcée. Le fluide peut être un liquide, notamment si le moule comprend un système de refroidissement actif entre les surfaces de moulage et le système d'appui. Le système de refroidissement actif peut par exemple comprendre des tuyaux situés entre la première isolation thermique et dans lesquels circulent le liquide refroidi. Le refroidissement par gaz et celui par liquide sont combinables.

Selon un mode de réalisation, le couplage mécanique entre la première surface extérieure et le premier dispositif d'appui et le couplage mécanique entre la deuxième surface extérieure et le deuxième dispositif d'appui comprend une première isolation thermique. Ainsi la transmission thermique entre la coquille et le système d'appui est particulièrement faible. Cela permet de consommer particulièrement peu d'énergie puisque la masse de matière à chauffer est limitée à la coquille qui est légère. En outre, cela empêche que le système d'appui ne se déforme thermiquement. La première isolation thermique peut être par exemple dans un matériau ayant une conductivité thermique inférieure à 0,5 W m⁻¹ K⁻¹, par exemple dans un matériau stratifié à base de fibres de verre et résine tel que le Glastherm. Il est aussi possible que les dispositifs d'appui soient dans un matériau isolant thermiquement, par exemple en composite fibres de carbone.

Selon un mode de réalisation, le glissement entre la première partie de la coquille et le premier dispositif d'appui se produit sur une pluralité de premières zones de glissement et le glissement entre la deuxième partie de la coquille et le deuxième dispositif d'appui se produit sur une pluralité de deuxièmes zones de glissement, le moule étant configuré de sorte que la distance selon la première direction entre les premières zones de glissement et les deuxièmes zones de glissement varie de moins de 20% sur l'ensemble du moule. Ainsi, la distance selon la première direction entre les points de jonction de la coquille et du système d'appui varie de moins de 20% sur l'ensemble du moule. Cela permet une application particulièrement uniforme de la pression selon la première direction car lorsque la coquille se dilate sur son épaisseur toutes les zones de glissement s'écartent selon la première direction de la même façon (ce qui est repris par le dispositif de serrage) et le contact n'est perdu nulle part.

La distance entre les éléments de la coquille n'est pas constante sur l'ensemble du moule. En effet, l'épaisseur de la pièce peut varier entre deux endroits du moule.

Selon un mode de réalisation, la première partie de la coquille comprend un premier segment et un deuxième segment assemblés par une fixation mécanique hors de la première surface de moulage et par une soudure le long de la première surface de moulage ; et/ou la deuxième partie de la coquille comprend un premier segment et un deuxième segment assemblés par une fixation mécanique hors de la deuxième surface de moulage et par une soudure le long de la deuxième surface de moulage. Avoir plusieurs segments facilite la fabrication et le transport du moule, et permet de séparer un seul segment de la première partie de la coquille ou de la deuxième partie de la coquille si on veut y réaliser une modification ou en cas de défaillance d'une partie de la coquille. L'assemblage mécanique, par exemple par boulonnage, permet une fixation séparable particulièrement résistante et précise. La soudure en surface permet que la surface de moulage soit hermétique. La soudure a préférentiellement une épaisseur de maximum 10 mm. Elle peut être réalisée par laser. Chacun des segments a de préférence une longueur inférieure à 10 mètres. La soudure est brisée lors de la désolidarisation des segments.

Selon un mode de réalisation, la coquille comprend des cavités dans la première surface de moulage et/ou la deuxième surface de moulage. Les cavités permettent de placer des renforts en saillie, qui, après moulage (donc polymérisation de la résine), formeront des éléments en saillie de la pièce, par exemple des raidisseurs.

Les cavités sont préférentiellement uniquement dans la première surface de moulage, et la deuxième partie de la coquille en est dépourvue. Si la première partie est située en-dessous de la deuxième partie, cela permet que la complexité soit dans la première partie, qui est plus lourde mais dont les manutentions sont limitées lors du processus de moulage, et que la deuxième partie, qui est amovible et objet de plus de manutentions, soit plus simple et plus légère.

Selon un mode de réalisation, le moule comprend des inserts amovibles situés dans les cavités, chaque insert comprenant un espace ouvert destiné à recevoir un renfort en saillie. Avec la résine polymérisée, le renfort en saillie constituera après moulage un élément en saillie de la pièce, typiquement un raidisseur. Les inserts peuvent être par exemple en dans le même matériau que la coquille. Ils peuvent comprendre au moins deux parties amovibles l'une par rapport à l'autre. Les inserts facilitent le moulage des éléments en saillie ainsi que leur démoulage.

Selon un mode de réalisation, le moule comprend des bras amovibles configurés pour porter les inserts et être insérés, au moins partiellement, dans des rainures de la première surface de moulage, et/ou de la deuxième surface de moulage. Les bras permettent de prendre les inserts dans lesquels se trouvent les renforts qui constitueront les éléments en saillies, raidisseur ou autre composant de la pièce, sur le système où ils ont été préparés tout en maintenant leurs positions respectives pour les déposer dans le moule. Ceci permet de segmenter des inserts qui auraient une longueur importante et de les préparer en les disposant à des postions relative précises. Un jeu précis entre segment d'insert peut être défini de façon à ce qu'une fois positionné dans le moule et amené à une température donnée, ce jeu entre segments disparaisse sous l'effet de l'expansion thermique des inserts, sans endommager les renforts qui y sont disposés.

Les bras permettent une installation avec précision des inserts froids et des renforts qu'ils contiennent dans une surface de moulage préalablement chauffée, par exemple entre 90 et 120°C. Un renfort peut ensuite être placé sur la surface de moulage et les inserts avant que l'autre surface de moulage soit mise en place. Elle aussi peut avoir été préchauffée. Cette solution permet de gagner du temps pour produire la pièce, la plus grande partie de la masse à chauffer ayant été préchauffée. Une fois la pièce polymérisée, par exemple à 180°C, les bras permettent de démouler la pièce aisément et de libérer rapidement le dispositif de moulage qui peut être alors utilisé pour mouler une autre pièce.

L'invention propose en outre un système comprenant un moule, un dispositif de serrage, et un système d'injection de résine configuré pour injecter une résine entre la première surface de moulage et la deuxième surface de moulage, de préférence dans et/ou autour d'au moins un renfort situé entre la première surface de moulage et la deuxième surface de moulage. L'au moins un renfort comprend le renfort principal et éventuellement un ou plusieurs autres renforts, par exemple des renforts en saillie. Dans le cas du procédé RTM, la résine est injectée dans l'au moins un renfort. Dans le procédé SQRTM, la résine est injectée autour de l'au moins un renfort avant polymérisation pour contrôler la pression dans la résine lors du processus de moulage. Le moule selon l'invention est prévu pour fonctionner par exemple avec un dispositif de serrage pneumatique dans lequel l'effort est transmis par un gaz comprimé. La pression est préférentiellement appliquée verticalement vers le haut par une partie inférieure du dispositif de serrage (comme illustré sur les figures). Le dispositif de serrage peut être en partie fixé au système d'appui ou d'un seul tenant avec le premier dispositif d'appui d'un côté et avec le deuxième dispositif d'appui de l'autre côté.

Selon un mode de réalisation, la pression appliquée par le dispositif de serrage peut être contrôlée par zones ce qui permet d'appliquer une pression différente aux bords de la coquille par rapport au centre de la coquille. Les pressions appliquées peuvent varier au cours du moulage pour faciliter l'injection de résine et/ou pour obtenir les épaisseurs voulues lors de la polymérisation de la résine.

L'invention propose en outre un procédé de moulage comprenant de chauffer une résine et un renfort principal dans un moule selon l'invention, de façon à mouler une pièce composite, intégrant le renfort principal et de la résine, et dont la première surface de pièce est moulée contre la première surface de moulage et la deuxième surface de pièce est moulée contre la deuxième surface de moulage. Pendant le chauffage, de la résine est préférentiellement injectée entre la première surface de moulage et la deuxième surface de moulage, et une pression selon la première direction est appliquée via le système d'appui. Le procédé peut être par exemple un moulage par transfert de résine sans imprégnation préalable du renfort (RTM) ou avec imprégnation préalable du renfort (SQRTM). Le procédé peut ne pas comprendre d'injection de résine (par exemple un procédé appelée en anglais « compression moulding » c'est-à-dire moulage par compression), si la quantité de résine déjà présente est telle que la pression recherchée est atteinte même sans injection. Le chauffage de la résine présente dans le renfort permet de la polymériser. Le chauffage est préférentiellement réalisé via le chauffage de la coquille. Le chauffage permet par exemple d'atteindre une température entre 120°C et 180°C. La pression permet notamment d'éviter un dégazage de la résine, voire une ébullition, qui conduirait à une pièce poreuse inacceptable. L'injection est préférentiellement réalisée sous une pression entre 5 et 10 bars.

Selon un mode de réalisation, la pièce est ou comprend un panneau de voilure pour aile d'aéronef, un empennage d'aéronef, un panneau de fuselage d'aéronef, un volet de voilure d'aéronef, un carénage d'aéronef ou une pièce de moteur d'aéronef.

Selon un mode de réalisation, la voilure peut comprendre un panneau supérieur fabriqué dans un moule selon l'invention, et un panneau inférieur fabriqué dans un autre moule selon l'invention. Selon un autre mode de réalisation, le panneau supérieur et le panneau inférieur sont fabriqués dans un même moule : le panneau supérieur contre une des surfaces de moulage de la coquille, et le panneau inférieur contre l'autre des surfaces de moulage de la coquille.

Selon un mode de réalisation, le procédé comprend, préalablement à l'injection de résine, d'insérer les inserts dans les cavités et d'insérer les renforts en saillies dans les espaces ouverts des inserts, de sorte que les renforts en saillies, le renfort principal et la résine soient unis par le moulage de façon à former la pièce. La précision des inserts et de leur positionnement font que les éléments en saillie ont une forme particulièrement bien définie.

Selon un mode de réalisation, la coquille est à une température supérieure à 40°C, par exemple entre 90°C et 120°C, au moment de l'insertion des inserts dans les cavités. Par exemple, la coquille peut être maintenue au-dessus de 40°C, par exemple entre 90°C et 120°C, entre des moulages successifs. Cela permet de diminuer la quantité d'énergie nécessaire à l'augmentation de la température de la coquille

Selon un mode de réalisation, le chauffage se déroule durant :
- une période durant laquelle la pression selon la première direction est uniforme sur l'ensemble de la coquille, et
- au moins une autre période durant laquelle la pression selon la première direction sur une zone centrale de coquille est différente de la pression sur une zone périphérique de coquille.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 est une vue schématique verticale d'une coquille,
- la figure 2 est une vue schématique verticale d'un système de moulage,
- la figure 3 est une vue schématique verticale d'une partie d'un moule,
- les figures 4a et 4b illustrent, respectivement, un premier et un deuxième dispositifs d'appui,
- la figure 5 est une vue schématique d'un assemblage entre plusieurs segments d'une première partie et d'une deuxième partie de coquille,
- la figure 6a est une vue du dessus d'une deuxième partie de coquille,
- la figure 6b est une vue du dessous d'une deuxième partie de coquille,
- la figure 7 est une vue du dessus d'une première partie de coquille,
- la figure 8 est une vue verticale illustrant un insert dans une cavité d'une première partie d'un moule,
- la figure 9 est une vue du haut schématique de renforts en saillie et d'inserts,
- la figure 10 est une vue du haut schématique de renforts en saillie et d'inserts sur une première partie de la coquille,
- la figure 11a est une coupe verticale schématique de renforts en saillie et d'inserts sur une première partie de la coquille, avant injection,
- la figure 11b est une coupe verticale schématique d'une pièce dans un moule en train de s'ouvrir, après injection, et
- la figure 11c est une coupe verticale schématique d'une pièce moulée.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants. En outre, les fonctions décrites peuvent être réalisées par d'autres structures que celles décrites dans le présent document.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

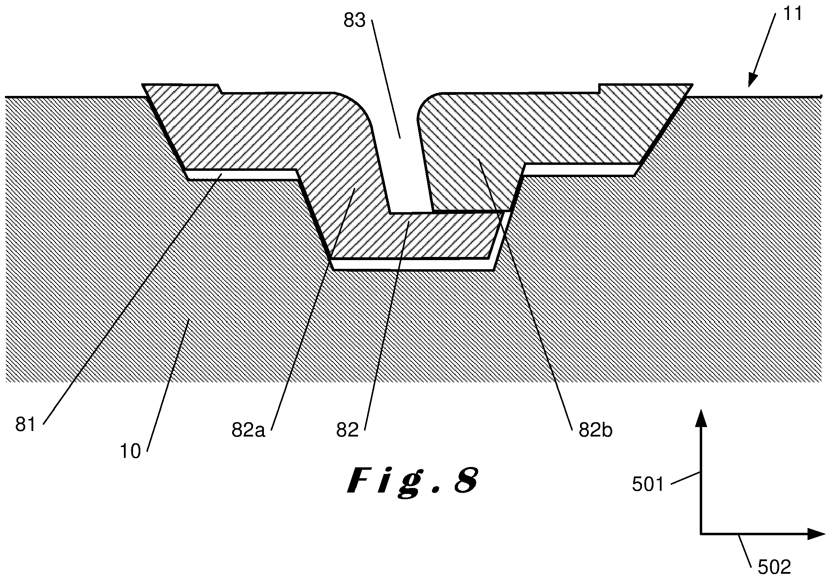

Les différents éléments de l'invention sont décrits en référence à une première 501, une deuxième 502, et une troisième 503 directions. La deuxième 502 et la troisième 503 directions sont perpendiculaires à la première direction 501 et sont préférentiellement perpendiculaires entre elles. Les références 501, 502 et 503 sont indiquées notamment à la figure 8. Les figures correspondent à un mode de réalisation de l'invention où la première direction 501 est verticale.

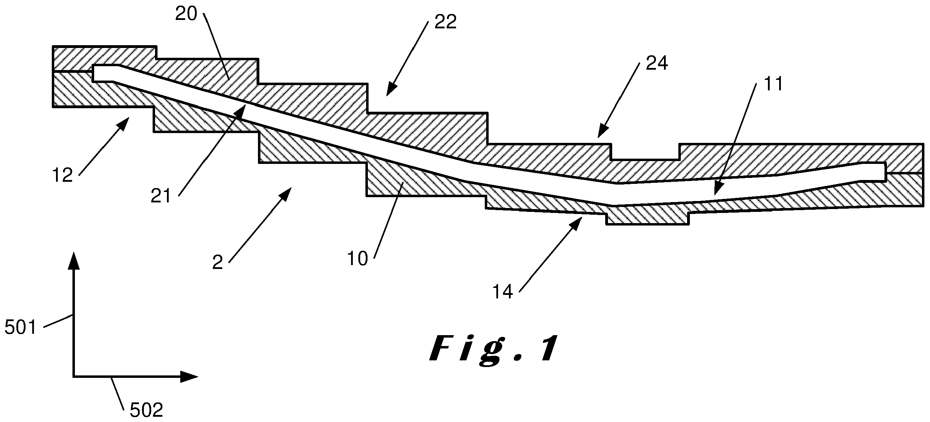

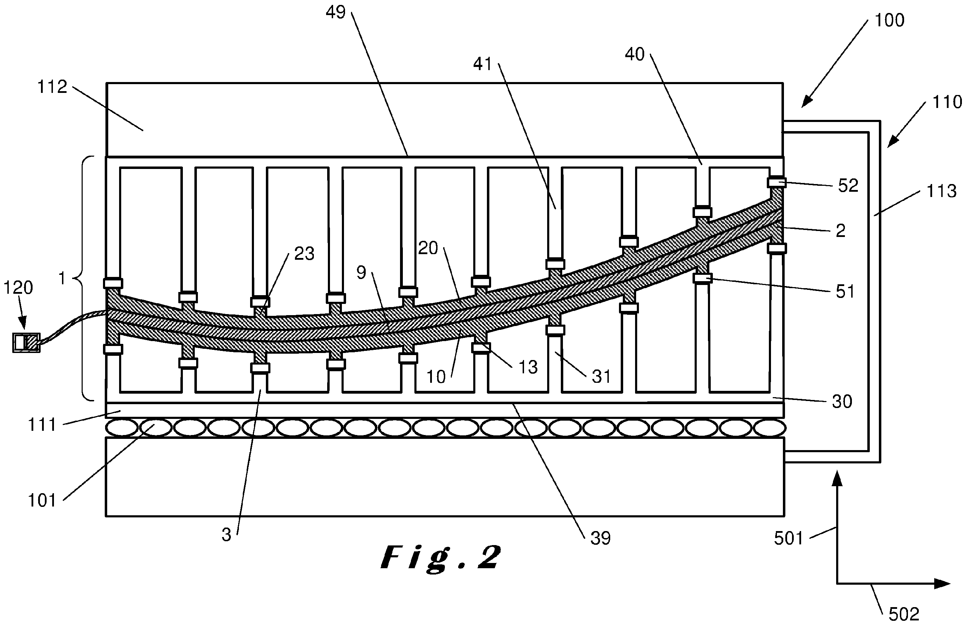

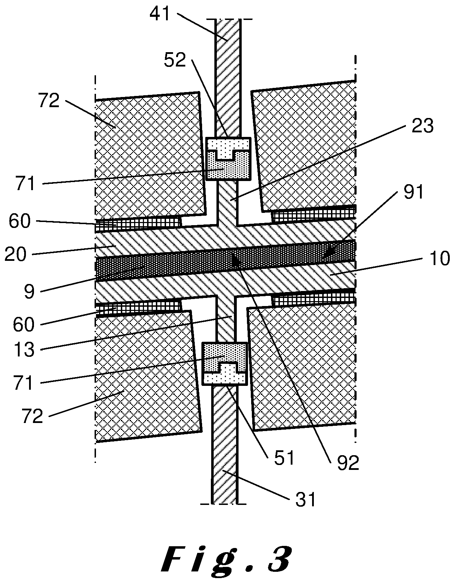

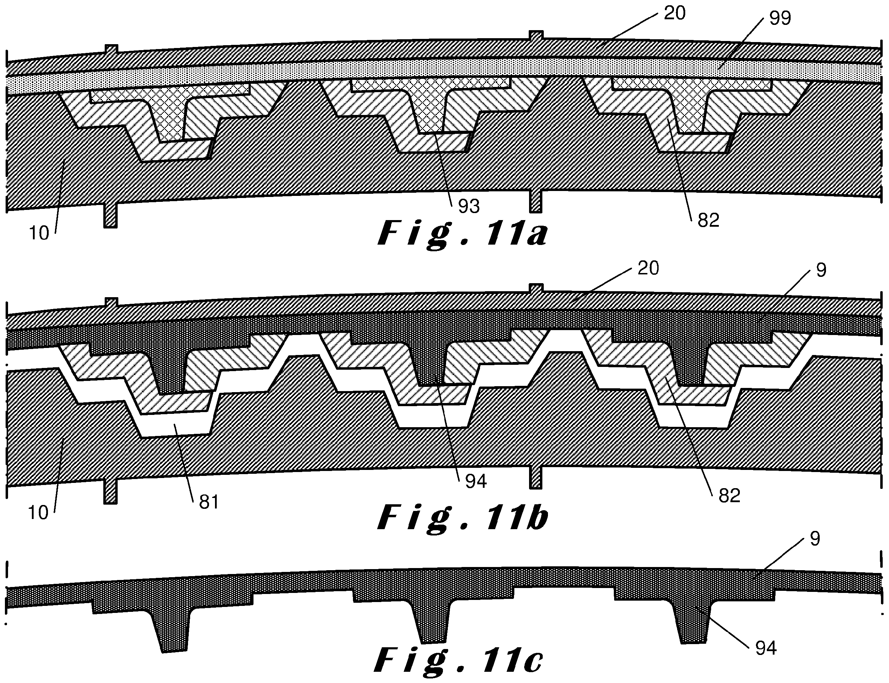

La figure 1 est une vue schématique verticale d'une coquille 2 destinée à être utilisée dans un moule 1 selon un mode de réalisation de l'invention. La coquille 2 comprend une première partie 10 et une deuxième partie 20. Lorsque la première direction 501 est verticale, la première partie 10 et la deuxième partie 20 sont essentiellement horizontales, et la première partie 10 est destinée à être au-dessous de la deuxième partie 20. La première partie 10 comprend une première surface de moulage 11, et la deuxième partie 20 comprend une deuxième surface de moulage 21, qui définissent ensemble la forme d'une pièce 9 (figures 2 et 3) qui sera moulée par le moule 1. La pièce 9, une fois moulée, intègre un renfort principal 99, des renforts en saillie 93 (figure 11a) et de la résine polymérisée. Le renfort principal 99 et les renforts en saillie 93 sont en fibres de carbone.

La première surface de moulage 11 permet de mouler la première surface de pièce 91 de la pièce 9 et la deuxième surface de moulage 21 permet de mouler la deuxième surface de pièce 92 de la pièce 9. La coquille 2 est prévue pour que, sur son pourtour, la première partie 10 et la deuxième partie 20 ne glissent pas, ou peu, l'une par rapport à l'autre. Par exemple, les frottements entre elles aux extrémités gauche et droite de la figure 1 peuvent être suffisants pour empêcher un glissement.

La première partie 10 comprend une première surface extérieure 12 opposée à la première surface de moulage 11, et la deuxième partie 20 comprend une deuxième surface extérieure 22 opposée à la deuxième surface de moulage 21. La première surface extérieure 12 et/ou la deuxième surface extérieure 22 sont non-planaires de façon à suivre, au moins partiellement, la courbure de la pièce 9. La première surface extérieure 12 comprend préférentiellement des facettes 14 perpendiculaires à la première direction 501, et/ou la deuxième surface extérieure 22 comprend préférentiellement des facettes 24 perpendiculaires à la première direction 501.

La figure 2 est une vue schématique verticale d'un système de moulage 100 selon un mode de réalisation de l'invention. Le système de moulage 100 comprend un moule 1 et un dispositif de serrage 110, par exemple pneumatique ou hydraulique, comprenant des boudins 101 prévu pour recevoir un fluide afin d'appliquer une pression selon la première direction 501 sur le moule 1. Le moule 1 comprend la coquille 2, et un système d'appui 3. Le système de moulage 100 comprend aussi, préférentiellement, un système d'injection de résine 120 configuré pour injecter une résine entre la première surface de moulage 11 et la deuxième surface de moulage 21.

Le système d'appui 3 comprend un premier dispositif d'appui 30 configuré pour presser selon la première direction 501 sur la première partie 10, via des premières zones de glissement 51, et un deuxième dispositif d'appui 40 configuré pour presser selon la première direction 501 sur la deuxième partie 20, via des deuxièmes zones de glissement 52. Les premières zones de glissement 51 ne sont pas dans un même plan et/ou les deuxièmes zones de glissement 52 ne sont pas dans un même plan.

Les premières zones de glissement permettent un glissement perpendiculaire à la première direction 501 entre la première partie 10 et le premier dispositif d'appui 30, et transmettent la pression selon la première direction 501 depuis le premier dispositif d'appui 30 vers la première partie 10. Les deuxièmes zones de glissement permettent un glissement perpendiculaire à la première direction 501 entre la deuxième partie 20 et le deuxième dispositif d'appui 40, et transmettent une pression selon la première direction 501 depuis le deuxième dispositif d'appui 40 vers la deuxième partie 20.

Dans un mode de réalisation de l'invention, la première surface extérieure 12 comprend des protubérances 13 s'étendant vers le bas, le premier dispositif d'appui 30 comprend des protubérances 31 s'étendant vers le haut, et les premières zones de glissement sont à l'interface entre les protubérances 13 de la première surface extérieure 12 et les protubérances 31 du premier dispositif d'appui 30.

Dans un mode de réalisation de l'invention, la deuxième surface extérieure 22 comprend des protubérances 23 s'étendant vers le haut, le deuxième dispositif d'appui 40 comprend des protubérances 41 s'étendant vers le bas, et les deuxièmes zones de glissement sont à l'interface entre les protubérances 23 de la deuxième surface extérieure 22 et les protubérances 41 du deuxième dispositif d'appui 40.

De préférence, la distance selon la première direction 501 entre les premières zones de glissement et les deuxièmes zones de glissement varie de moins de 20% sur l'ensemble du moule 1.

Le premier dispositif d'appui 30 comprend une surface extérieure plane 39, orientée à l'opposé de la coquille 2, qui est perpendiculaire à la première direction 501. La surface extérieure plane 39 est en contact ou est d'un seul tenant avec une première partie 111 du dispositif de serrage 110. Le deuxième dispositif d'appui 40 comprend une surface extérieure plane 49, orientée à l'opposé de la coquille 2, qui est perpendiculaire à la première direction 501. La surface extérieure 49 plane est en contact ou est d'un seul tenant avec une deuxième partie 112 du dispositif de serrage 110. La première partie 111 du dispositif de serrage 110 et la deuxième partie 112 du dispositif de serrage 110 sont couplées mécaniquement 113.

La figure 3 est une vue schématique verticale d'une partie d'un moule 1 selon un mode de réalisation de l'invention. Elle permet d'illustrer certaines caractéristiques optionnelles de l'invention, notamment des éléments de chauffage 60 localisés entre les protubérances 13, 23 de la coquille 2, une première isolation thermique 71 située aux zones de glissement 51, 52, et une deuxième isolation thermique 72 située sur les éléments de chauffage 60 à l'opposé de la coquille 2. La deuxième isolation thermique 72 peut être par exemple dans un matériau ayant une conductivité thermique inférieure à 0,5 W m⁻¹ K⁻¹, par exemple dans de la laine de verre.

Les éléments de chauffage 60 sont préférentiellement contre les surfaces extérieures 12, 22, notamment en cas de chauffage par conduction. Les éléments de chauffage 60 sont préférentiellement face aux surfaces extérieurs 12, 22 en cas de chauffage radiatif ou inductif.

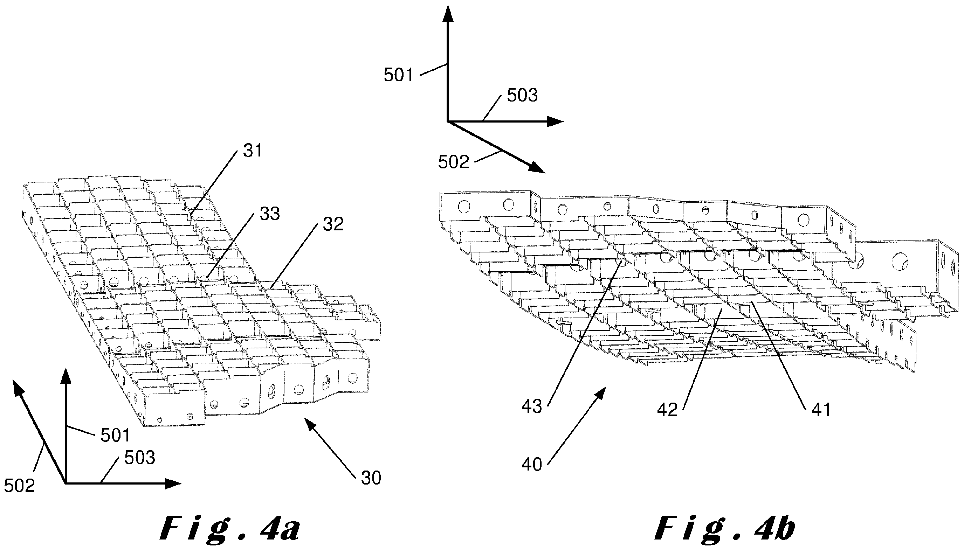

Les figures 4a et 4b illustrent, respectivement, le premier 30 et le deuxième 40 dispositifs d'appui dans un mode de réalisation de l'invention dans lequel les protubérances 31, 41 des dispositifs d'appui 30, 40 sont des arêtes. Les protubérances 31, 41 forment des parois délimitant des compartiments 32, 42 ou caissons. Ces parois sont préférentiellement traversées de trous créant des passages 33, 43 entre les compartiments 32, 42. Une telle architecture des dispositifs d'appui 30, 40 permet qu'ils soient particulièrement légers, ce qui permet notamment de faciliter leur manutention. Cela permet aussi d'évacuer les calories grâce à l'air circulant, par exemple par convection forcée, et grâce à un système de fluide caloporteur.

De façon générale, il est préféré que les dispositifs d'appui 30, 40 soient creux à au moins 50%. Autrement dit, au moins 50% du volume occupé par chacun des dispositifs d'appui 30, 40 n'est pas dans un matériau solide.

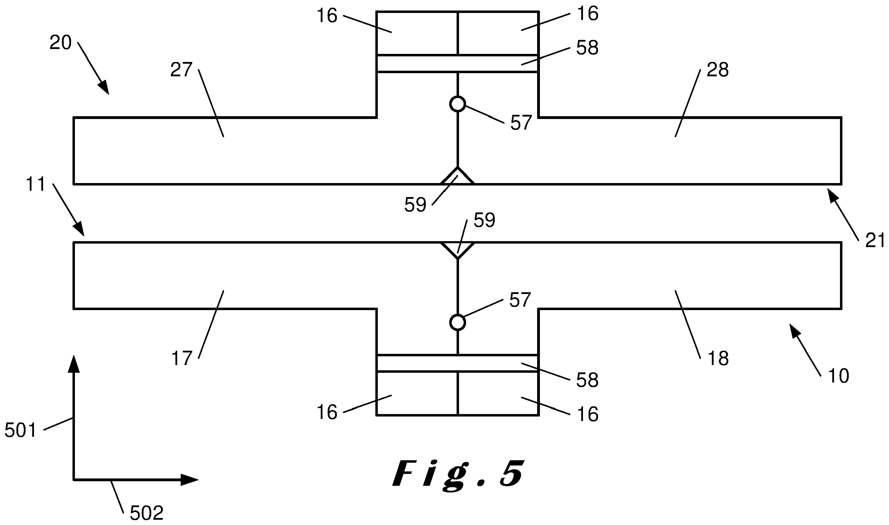

La figure 5 est une vue schématique d'un assemblage entre un premier 17 et un deuxième 18 segments de la première partie 10, et d'un assemblage entre un premier 27 et un deuxième 28 segments de la deuxième partie 20 dans un mode de réalisation de l'invention. Chacun des assemblages comprend une fixation mécanique 58 qui est localisée à l'extérieur de la surface de moulage 11, 21, et/ou une soudure 59 qui est localisée au moins sur la surface de moulage 11, 21. La fixation mécanique 58 et la soudure 59 sont préférentiellement séparées spatialement l'une de l'autre. La fixation mécanique 58 peut par exemple comprendre des brides 16, 26 traversées par des boulons. La soudure 59 peut avoir une coupe longitudinale triangulaire. L'interface entre les segments 17, 18 ou 27, 28 peut comprendre un joint 57.

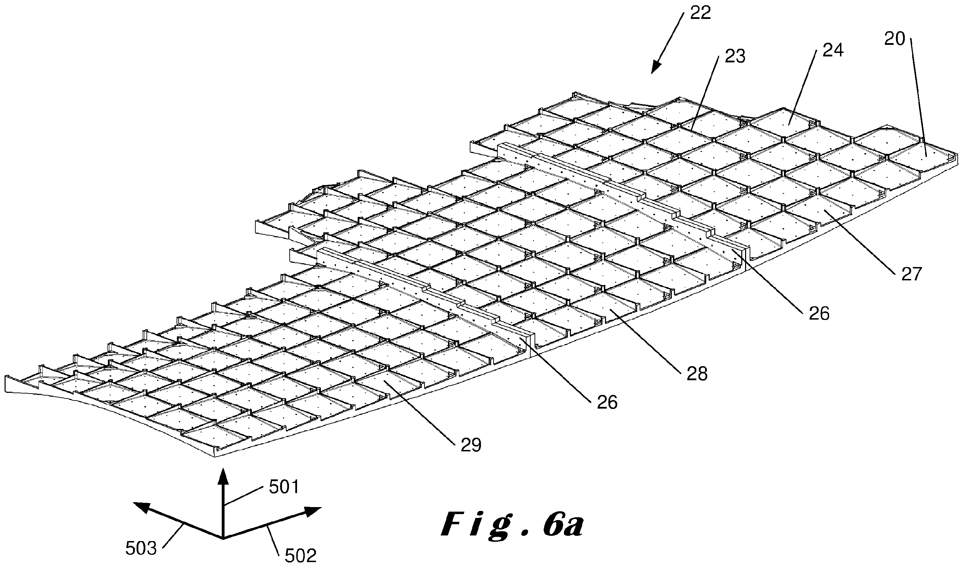

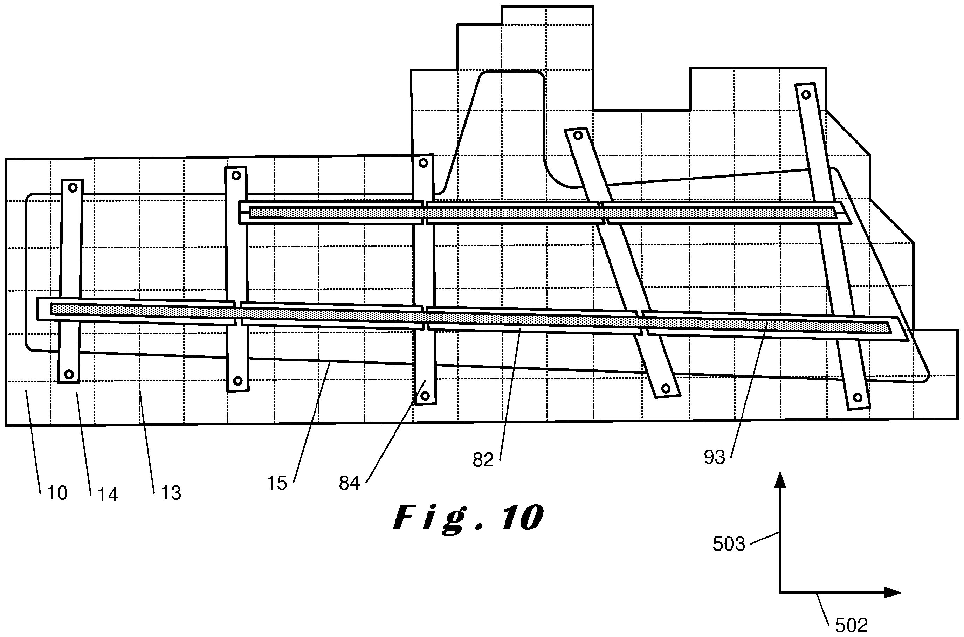

La figure 6a illustre la deuxième surface extérieure 22 de la deuxième partie 20 de coquille dans un mode de réalisation de l'invention. Les protubérances 23 de la deuxième partie 20 sont des arêtes. Elles délimitent des facettes 24. De même, comme cela apparait mieux figure 10, les protubérances 13 de la première partie sont des arêtes qui délimitent des facettes 14. La deuxième partie 20 comprend un premier 27, un deuxième 28 et un troisième 29 segments qui se terminent par des brides 26 à leurs jonctions.

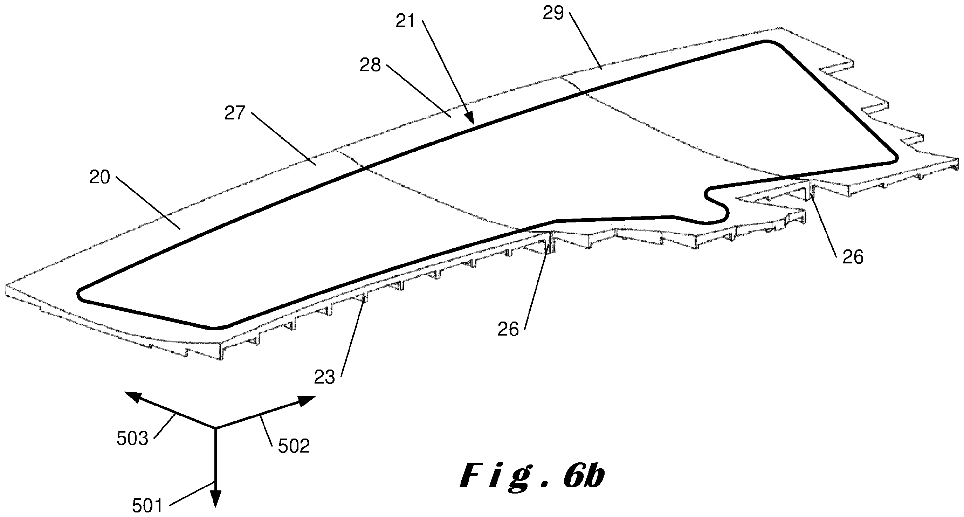

La figure 6b illustre la première surface de moulage 21 de la deuxième partie 20 de coquille dans un mode de réalisation de l'invention.

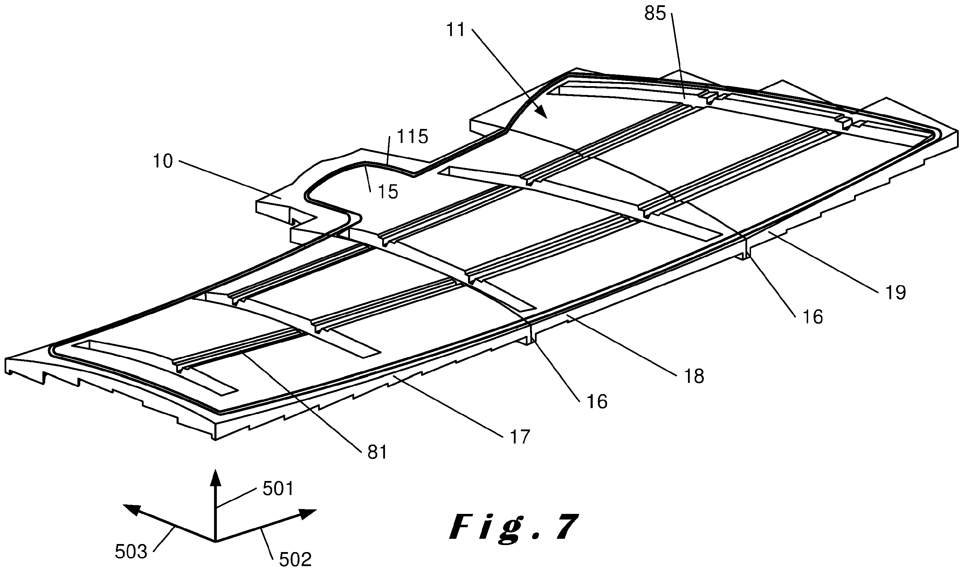

La figure 7 illustre la première surface de moulage 11 de la première partie 10 de coquille dans un mode de réalisation de l'invention. La première partie 10 comprend un premier 17, un deuxième 18 et un troisième 19 segments. Le pourtour 15 de la pièce 9 est visible sur la première surface de moulage 11. Le moule 1 comprend préférentiellement un joint 115 autour du pourtour 15.

Dans un mode de réalisation de l'invention, la coquille 2 comprend des cavités 81, préférentiellement dans la première surface de moulage 11, prévues pour recevoir, au moins partiellement, des renforts en saillie 93 (visibles figure 11a notamment). En plus ou à la place, elle pourrait en comprendre dans la deuxième surface de moulage 21. Les cavités 81 et les renforts en saillie 93 s'étendent notamment perpendiculairement à la première direction 501. Ils s'étendent principalement selon la deuxième direction 502. Ils ne sont pas parallèles. Le renfort principal 99 et les renforts en saillie 93 sont préformés : ils sont déjà en forme avant leur intégration à la pièce 9 lors du moulage.

La coquille 2 comprend préférentiellement des rainures 85 de la première surface de moulage 11, ou éventuellement de la deuxième surface de moulage 12. Les rainures 85 sont destinées à recevoir des bras 84 (visibles figure 10). Les bras 84 et les rainures 85 s'étendent préférentiellement, au moins en partie, selon la troisième direction 503.

Les renforts en saillie 93 sont préférentiellement insérés, au moins partiellement, dans des espaces ouverts 83 d'inserts 82 amovibles par rapport à la coquille 2, les inserts 82 étant eux-mêmes au moins partiellement insérés dans les cavités 81 (figure 8).

Les inserts 82 peuvent être portés par des bras 84 (visibles figure 10) insérés, au moins partiellement, dans des rainures 85 de la première surface de moulage 11, ou éventuellement de la deuxième surface de moulage 12.

La figure 8 permet aussi d'illustrer que les inserts 82 sont préférentiellement au moins partiellement insérés dans les cavités 81. Les inserts 82 sont amovibles par rapport à la coquille 2. Ils sont préférentiellement en deux parties 82a, 82b, l'espace ouvert 83 étant entre les deux parties 82a, 82b. Ils sont destinés à portés les renforts en saillie 93.

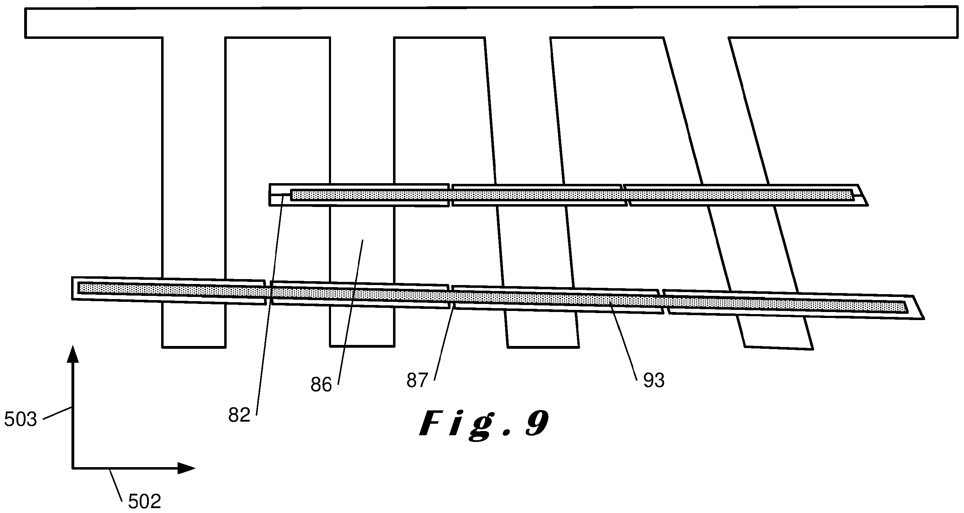

La figure 9 est une vue du haut schématique des renforts en saillie 93 lors de leur installation dans les inserts 82. Un renfort en saillie 93 peut reposer sur plusieurs inserts 82 séparés par un espace intercalaire 87. Les inserts 82 peuvent alors être portés par un système de support 86 temporaire. Les bras 84 viennent chercher les inserts 82 et les renforts en saillie 93 sur le système de support 86 tout en respectant leurs positions respectives, et sont placés sur la première partie 10 comme illustré figure 10.

La figure 10 est une vue du haut schématique des renforts en saillie 93 et des inserts 82 lors de leur installation sur la première partie 10. Les protubérances 13 sous forme d'arêtes et les facettes 14, qui sont sur la première surface extérieure 12 de la première partie 10 y sont aussi représentés.

En pratique, entre les moulages successifs de deux pièces 9, la coquille 2 reste chaude, par exemple vers 120°-140°. La coquille 2 reste au moins à 40°C par exemple. Lorsque les bras 84 portant les inserts 82 et les renforts en saillie 93 sont placés sur la première partie 10 chaude, les inserts 82 se dilatent et les espaces intercalaires 87 disparaissent.

La figure 11a est une vue en coupe verticale illustrant un positionnement précis du renfort principal 99, des inserts 82 et renforts en saillie 93 dans la première partie 10 avant injection.

Lors de l'injection, le renfort principal 99 et les renforts en saillie 93 sont situés dans l'espace entre les surfaces de moulage 11, 21 et la résine qu'ils contiennent et qui les entoure cuit de façon à polymériser. Le dispositif de serrage 110 applique, via le système d'appui 3, une pression selon la première direction 501 empêchant les surfaces de moulage 11, 21 de s'écarter selon la première direction 501. Sous l'effet de la température (par exemple de 160°-180°), les surfaces de moulage 11, 21 se dilatent horizontalement par rapport au système d'appui 3 grâce aux zones de glissement. Les renforts en saillie 93, le renfort principal 90 et la résine sont intégrés dans la pièce 9 lors de la polymérisation de la résine.

De préférence, le chauffage comprend une période durant laquelle la pression selon la première direction 501 est appliquée uniformément sur la coquille 2, et au moins une autre période durant laquelle la pression selon la première direction 501 sur une zone centrale de coquille 2 est différente de la pression sur une zone périphérique de coquille 2. Par exemple, lors d'une première période, la pression selon la première direction 501 peut être plus faible sur la zone centrale que sur la zone périphérique pour faciliter l'injection ; lors d'une deuxième période, la pression selon la première direction 501 peut être uniforme pour obtenir la forme voulue de la pièce ; puis, lors d'une troisième période, la pression selon la première direction 501 peut être plus faible sur la zone centrale que sur la zone périphérique pour éviter d'écraser le centre de la pièce. En effet, lors du chauffage, lorsque la résine commence à se solidifier, la pièce 9 rétrécit et la pression qu'elle exerce sur la coquille 2 diminue. La diminution de pression du moule 1 sur la pièce 9, au moins sur la zone centrale de la coquille 2, permet de prendre en compte ce phénomène. Maintenir le pourtour 15 de la pièce 9 (illustré figure 7) à une pression plus élevée que la zone centrale permet de maintenir l'étanchéité.

Pour permettre le changement temporel de la pression sur la pièce 9, le dispositif de serrage 110 est configuré pour pouvoir changer la pression dans le temps. Pour permettre l'ajustement spatial de la pression sur la pièce 9, le dispositif de serrage 110 comprend préférentiellement une zone centrale et une zone périphérique entourant la zone centrale, telles que la pression dans la zone centrale puisse être différente de celle dans la zone périphérique.

La figure 11b illustre la pièce 9 lorsque la deuxième partie 20 est soulevée. Les bras 84, qui sont restés lors de l'injection, aident à la manutention de la pièce 9 lors du démoulage.

La figure 11c illustre la pièce 9 sortie du moule 1. La pièce 9 comprend des éléments en saillie 94 qui sont formés des renforts en saillies 93 et de résine polymérisée.

En d'autres termes, l'invention se rapporte à un moule 1 pour mouler une pièce 9 incurvée de grande dimension. Le moule 1 comprend une première partie 10, une deuxième partie 20, des dispositifs d'appui 30, 40, et des zones de glissement situées entre la première partie 10 et un 30 des dispositifs d'appui 30, 40 et entre la deuxième partie 20 et l'autre 40 des dispositifs d'appui 30, 40. Le moule 1 permet un glissement horizontal de la première partie 10 et de la deuxième partie 20 alors que les dispositifs d'appui 30, 40 leur appliquent une pression verticale.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Moule (1) pour mouler au moins une partie d'une pièce (9) incurvée, la pièce (9) ayant une première surface de pièce (91) et une deuxième surface de pièce (92) séparées par une épaisseur, le moule (1) comprenant:
• une coquille (2) comprenant :
∘ une première partie (10) comprenant une première surface de moulage (11) pour mouler la première surface de pièce (91), et une première surface extérieure (12) opposée à la première surface de moulage (11),
∘ une deuxième partie (20) comprenant une deuxième surface de moulage (21) pour mouler la deuxième surface de pièce (92), et une deuxième surface extérieure (22) opposée à la deuxième surface de moulage (21), au moins l'une des première et deuxième surfaces extérieures (12, 22) étant non-plane ;
• un système d'appui (3) comprenant :
∘ un premier dispositif d'appui (30) couplé mécaniquement à la première partie (10) et configuré pour presser sur la première partie (10) selon une première direction (501), et
∘ un deuxième dispositif d'appui (40) couplé mécaniquement à la deuxième partie (20) et configuré pour presser sur la deuxième partie (20) selon la première direction (501) ;
le moule (1) étant configuré pour permettre, entre la première partie de la coquille (10) et le premier dispositif d'appui (30), et entre la deuxième partie de la coquille (20) et le deuxième dispositif d'appui (40), un glissement dans au moins une direction perpendiculaire à la première direction (501).

2. Moule selon la revendication précédente, dans lequel le couplage mécanique entre la première surface extérieure (12) et le premier dispositif d'appui (30) comprend des protubérances (13) s'étendant à partir de la première surface extérieure (12) vers le premier dispositif d'appui (30) et/ou des protubérances (31) s'étendant à partir du premier dispositif d'appui (30) vers la première surface extérieure (12); et le couplage mécanique entre la deuxième surface extérieure (22) et le deuxième dispositif d'appui (40) comprend des protubérances (23) s'étendant à partir de la deuxième surface extérieure (22) vers le deuxième dispositif d'appui (40) et/ou des protubérances (41) s'étendant à partir du deuxième dispositif d'appui (40) vers la deuxième surface extérieure (22).

3. Moule selon la revendication précédente, dans lequel au moins certaines des protubérances (13, 23, 31, 41) comprennent des arêtes.

4. Moule selon l'une des revendications 2 ou 3, comprenant des éléments de chauffage (60) fixés à la première surface extérieure (12), et/ou à la deuxième surface extérieure (22), et/ou au système d'appui (3), et situés entre des protubérances (13, 23, 31, 41).

5. Moule selon l'une quelconque des revendications précédentes, dans lequel le système d'appui (3) comprend des passages (33, 43) configurés pour faire passer un fluide caloporteur.

6. Moule selon l'une quelconque des revendications précédentes, dans lequel le couplage mécanique entre la première surface extérieure (12) et le premier dispositif d'appui (30) et le couplage mécanique entre la deuxième surface extérieure (22) et le deuxième dispositif d'appui (40) comprend une première isolation thermique (71).

7. Moule selon l'une quelconque des revendications précédentes, dans lequel le glissement entre la première partie (10) et le premier dispositif d'appui (30) se produit sur une pluralité de premières zones de glissement et le glissement entre la deuxième partie (20) et le deuxième dispositif d'appui (40) se produit sur une pluralité de deuxièmes zones de glissement, le moule (1) étant configuré de sorte que la distance selon la première direction (501) entre les premières zones de glissement et les deuxièmes zones de glissement varie de moins de 20% sur l'ensemble du moule (1).

8. Moule selon l'une quelconque des revendications précédentes, dans lequel la première partie (10) comprend un premier segment (17) et un deuxième segment (18) assemblés par une fixation mécanique (58) hors de la première surface de moulage (11) et par une soudure (59) le long de la première surface de moulage (11) ; et/ou la deuxième partie comprend un premier segment (27) et un deuxième segment (28) assemblés par une fixation mécanique (58) hors de la deuxième surface de moulage (21) et par une soudure (59) le long de la deuxième surface de moulage (21).

9. Moule selon l'une quelconque des revendications précédentes, dans lequel la coquille (2) comprend des cavités (81) dans la première surface de moulage (11) et/ou la deuxième surface de moulage (21) ; le moule (1) comprenant des inserts (82) amovibles situés dans les cavités (81), chaque insert (82) comprenant un espace ouvert (83) destiné à recevoir un renfort en saillie (93) ; le moule (1) comprenant des bras (84) amovibles configurés pour porter les inserts (82) et être insérés, au moins partiellement, dans des rainures (85) de la première surface de moulage (11), et/ou de la deuxième surface de moulage (12).

10. Système de moulage (100) comprenant un moule (1) selon l'une quelconque des revendications précédentes, un dispositif de serrage (110), et un système d'injection de résine (120) configuré pour injecter une résine entre la première surface de moulage (11) et la deuxième surface de moulage (21).

11. Procédé de moulage comprenant de chauffer une résine et un renfort principal (99) dans un moule (1) selon l'une quelconque des revendications 1 à 9, de façon à mouler une pièce (9) composite, intégrant le renfort principal (99) et de la résine, et dont la première surface de pièce (91) est moulée contre la première surface de moulage (11) et la deuxième surface de pièce (92) est moulée contre la deuxième surface de moulage (21), pendant que de la résine est injectée entre la première surface de moulage (11) et la deuxième surface de moulage (21), et qu'une pression selon la première direction (501) est appliquée via le système d'appui (3).

12. Procédé selon la revendication précédente, dans lequel la pièce (9) comprend un panneau de voilure pour aile d'aéronef, un empennage d'aéronef, un panneau de fuselage d'aéronef, un volet de voilure d'aéronef, un carénage d'aéronef ou une pièce de moteur d'aéronef.

13. Procédé selon la revendication 11 ou 12, dans lequel le moule (1) est un moule selon la revendication 9, le procédé comprenant, préalablement à l'injection de résine, d'insérer les inserts (82) dans les cavités (81) et d'insérer les renforts en saillies (93) dans les espaces ouverts (83), de sorte que les renforts en saillies (93), le renfort principal (99) et la résine soient unis par le moulage de façon à former la pièce (9).

14. Procédé selon la revendication précédente, dans lequel la coquille (2) est à une température supérieure à 40°C au moment de l'insertion des inserts (82) dans les cavités (81).

15. Procédé selon l'une quelconque des revendications 11 à 14, dans lequel le chauffage se déroule durant :
• une période durant laquelle la pression selon la première direction (501) est uniforme sur l'ensemble de la coquille (2), et
• au moins une autre période durant laquelle la pression selon la première direction (501) sur une zone centrale de coquille (2) est différente de la pression sur une zone périphérique de coquille (2).

## Patentansprüche

1. Form (1) zum Formen mindestens eines Teils eines gekrümmten Werkstücks (9), wobei das Werkstück (9) eine erste Werkstückfläche (91) und eine zweite Werkstückfläche (92) aufweist, die durch eine Dicke getrennt sind, wobei die Form (1) umfasst:
- eine Schale (2), umfassend:
- einen ersten Teil (10), der eine erste Formgebungsfläche (11) zum Formen der ersten Werkstückfläche (91), und eine der ersten Formgebungsfläche (11) gegenüberliegende erste Außenfläche (12) umfasst,
- einen zweiten Teil (20), der eine zweite Formgebungsfläche (21) zum Formen der zweiten Werkstückfläche (92), und eine der zweiten Formgebungsfläche (21) gegenüberliegende zweite Außenfläche (22) umfasst, wobei mindestens eine der ersten und der zweiten Außenfläche (12, 22) uneben ist;
- ein Stützsystem (3), umfassend:
- eine erste Stützvorrichtung (30), die mechanisch mit dem ersten Teil (10) gekoppelt und so konfiguriert ist, dass sie in eine erste Richtung (501) auf den ersten Teil (10) drückt, und
- eine zweite Stützvorrichtung (40), die mechanisch mit dem zweiten Teil (20) gekoppelt und so konfiguriert ist, dass sie in die erste Richtung (501) auf den zweiten Teil (20) drückt;
wobei die Form (1) so konfiguriert ist, dass sie zwischen dem ersten Teil der Schale (10) und der ersten Stützvorrichtung (30), und zwischen dem zweiten Teil der Schale (20) und der zweiten Stützvorrichtung (40) ein Gleiten in mindestens eine Richtung senkrecht zur ersten Richtung (501) ermöglicht.

2. Form nach dem vorstehenden Anspruch, wobei die mechanische Kopplung zwischen der ersten Außenfläche (12) und der ersten Stützvorrichtung (30) Vorsprünge (13) umfasst, die sich von der ersten Außenfläche (12) zur ersten Stützvorrichtung (30) erstrecken, und/oder Vorsprünge (31), die sich von der ersten Stützvorrichtung (30) zur ersten Außenfläche (12) erstrecken; und die mechanische Kopplung zwischen der zweiten Außenfläche (22) und der zweiten Stützvorrichtung (40) Vorsprünge (23) umfasst, die sich von der zweiten Außenfläche (22) zur zweiten Stützvorrichtung (40) erstrecken, und/oder Vorsprünge (41), die sich von der zweiten Stützvorrichtung (40) zur zweiten Außenfläche (22) erstrecken.

3. Form nach dem vorstehenden Anspruch, wobei mindestens einige der Vorsprünge (13, 23, 31, 41) Kanten umfassen.

4. Form nach einem der Ansprüche 2 oder 3, die Heizelemente (60) umfasst, die an der ersten Außenfläche (12) und/oder an der zweiten Außenfläche (22) und/oder am Stützsystem (3) befestigt sind und sich zwischen Vorsprüngen (13, 23, 31, 41) befinden.

5. Form nach irgendeinem der vorstehenden Ansprüche, wobei das Stützsystem (3) Durchlässe (33, 43) umfasst, die so konfiguriert sind, dass sie ein Wärmeträgerfluid durchlassen.

6. Form nach irgendeinem der vorstehenden Ansprüche, wobei die mechanische Kopplung zwischen der ersten Außenfläche (12) und der ersten Stützvorrichtung (30) und die mechanische Kopplung zwischen der zweiten Außenfläche (22) und der zweiten Stützvorrichtung (40) eine erste Wärmedämmung (71) umfasst.

7. Form nach irgendeinem der vorstehenden Ansprüche, wobei das Gleiten zwischen dem ersten Teil (10) und der ersten Stützvorrichtung (30) über eine Vielzahl von ersten Gleitbereichen erfolgt, und das Gleiten zwischen dem zweiten Teil (20) und der zweiten Stützvorrichtung (40) über eine Vielzahl von zweiten Gleitbereichen erfolgt, wobei die Form (1) so konfiguriert ist, dass der Abstand in die erste Richtung (501) zwischen den ersten Gleitbereichen und den zweiten Gleitbereichen über die gesamte Form (1) um weniger als 20 % variiert.

8. Form nach irgendeinem der vorstehenden Ansprüche, wobei der erste Teil (10) ein erstes Segment (17) und ein zweites Segment (18) umfasst, die durch eine mechanische Befestigung (58) außerhalb der ersten Formgebungsfläche (11) und durch eine Schweißung (59) entlang der ersten Formgebungsfläche (11) zusammengefügt sind; und/oder der zweite Teil ein erstes Segment (27) und ein zweites Segment (28) umfasst, die durch eine mechanische Befestigung (58) außerhalb der zweiten Formgebungsfläche (21) und durch eine Schweißung (59) entlang der zweiten Formgebungsfläche (21) zusammengefügt sind.

9. Form nach irgendeinem der vorstehenden Ansprüche, wobei die Schale (2) Hohlräume (81) in der ersten Formgebungsfläche (11) und/oder der zweiten Formgebungsfläche (21) umfasst; wobei die Form (1) abnehmbare Einsätze (82) umfasst, die sich in den Hohlräumen (81) befinden, wobei jeder Einsatz (82) einen offenen Raum (83) umfasst, der dazu bestimmt ist, eine hervorstehende Verstärkung (93) aufzunehmen; wobei die Form (1) abnehmbare Arme (84) umfasst, die so konfiguriert sind, dass sie die Einsätze (82) tragen und mindestens teilweise in Nuten (85) der ersten Formgebungsfläche (11) und/oder der zweiten Formgebungsfläche (12) eingesetzt werden können.

10. Formgebungssystem (100), das eine Form (1) nach irgendeinem der vorstehenden Ansprüche, eine Spannvorrichtung (110), und ein Harzeinspritzsystem (120) umfasst, das so konfiguriert ist, dass es ein Harz zwischen die erste Formgebungsfläche (11) und die zweite Formgebungsfläche (21) einspritzt.

11. Formgebungsverfahren, das das Erhitzen eines Harzes und einer Hauptverstärkung (99) in einer Form (1) nach irgendeinem der Ansprüche 1 bis 9 umfasst, um ein Verbundwerkstück (9) zu formen, das die Hauptverstärkung (99) und Harz eingliedert, und von dem die erste Werkstückfläche (91) an der ersten Formgebungsfläche (11) geformt wird und die zweite Werkstückfläche (92) an der zweiten Formgebungsfläche (21) geformt wird, während Harz zwischen die erste Formgebungsfläche (11) und die zweite Formgebungsfläche (21) eingespritzt wird und über das Stützsystem (3) ein Druck in die erste Richtung (501) angelegt wird.

12. Verfahren nach dem vorstehenden Anspruch, wobei das Werkstück (9) eine Tragflächenplatte für einen Flugzeugflügel, ein Flugzeugleitwerk, eine Flugzeugrumpfplatte, eine Flugzeugtragflächenklappe, eine Flugzeugverkleidung oder ein Werkstück für einen Flugzeugmotor umfasst.

13. Verfahren nach Anspruch 11 oder 12, wobei die Form (1) eine Form nach Anspruch 9 ist, wobei das Verfahren vor dem Einspritzen von Harz das Einsetzen der Einsätze (82) in die Hohlräume (81) und das Einsetzen der hervorstehenden Verstärkungen (93) in die offenen Räume (83) umfasst, sodass die hervorstehenden Verstärkungen (93), die Hauptverstärkung (99) und das Harz durch das Formen vereint werden, um das Werkstück (9) zu bilden.

14. Verfahren nach dem vorstehenden Anspruch, wobei sich die Schale (2) zum Zeitpunkt des Einsetzens der Einsätze (82) in die Hohlräume (81) auf einer Temperatur von mehr als 40 °C befindet.

15. Verfahren nach einem der Ansprüche 11 bis 14, wobei das Erhitzen erfolgt während:
- einem Zeitraum, in dem der Druck in die erste Richtung (501) über die gesamte Schale (2) gleichmäßig ist, und
- mindestens einem weiteren Zeitraum, in dem sich der Druck in die erste Richtung (501) auf einem zentralen Bereich der Schale (2) vom Druck auf einen Randbereich der Schale (2) unterscheidet.

## Claims

1. A mould (1) for moulding at least portion of a curved part (9), the part (9) having a first part surface (91) and a second part surface (92) separated by a thickness, the mould (1) comprising:
• a shell (2) comprising:
∘ a first portion (10) comprising a first moulding surface (11) for moulding the first part surface (91), and a first outer surface (12) opposite the first moulding surface (11),
∘ a second portion (20) comprising a second moulding surface (21) for moulding the second part surface (92), and a second outer surface (22) opposite the second moulding surface (21), at least one of the first and second outer surfaces (12, 22) being non-planar;
• a bearing system (3) comprising:
∘ a first bearing device (30) mechanically coupled to the first portion (10) and configured to press on the first portion (10) along a first direction (501), and
∘ a second bearing device (40) mechanically coupled to the second portion (20) and configured to press on the second portion (20) along the first direction (501);
the mould (1) being configured to allow sliding in at least one direction perpendicular to the first direction (501) between the first portion of the shell (10) and the first bearing device (30), and between the second portion of the shell (20) and the second bearing device (40).

2. The mould according to the preceding claim, wherein the mechanical coupling between the first outer surface (12) and the first bearing device (30) comprises protrusions (13) extending from the first outer surface (12) to the first bearing device (30) and/or protrusions (31) extending from the first bearing device (30) to the first outer surface (12); and the mechanical coupling between the second outer surface (22) and the second bearing device (40) comprises protrusions (23) extending from the second outer surface (22) to the second bearing device (40) and/or protrusions (41) extending from the second bearing device (40) to the second outer surface (22).

3. The mould according to the preceding claim, wherein at least some of the protrusions (13, 23, 31,41) comprise ridges.

4. The mould according to one of claims 2 or 3, comprising heating elements (60) attached to the first outer surface (12), and/or to the second outer surface (22), and/or to the bearing system (3), and located between protrusions (13, 23, 31,41).

5. The mould according to any one of the preceding claims, wherein the bearing system (3) comprises passages (33, 43) configured to pass a heat transfer fluid.

6. The mould according to any one of the preceding claims, wherein the mechanical coupling between the first outer surface (12) and the first bearing device (30) and the mechanical coupling between the second outer surface (22) and the second bearing device (40) comprises a first thermal insulation (71).

7. The mould according to any one of the preceding claims, wherein the sliding between the first portion (10) and the first bearing device (30) occurs over a plurality of first sliding areas and the sliding between the second portion (20) and the second bearing device (40) occurs over a plurality of second sliding areas, the mould (1) being configured such that the distance along the first direction (501) between the first sliding areas and the second sliding areas varies by less than 20% over the entire mould (1).

8. The mould according to any one of the preceding claims, wherein the first portion (10) comprises a first segment (17) and a second segment (18) joined by a mechanical fastener (58) outside the first moulding surface (11) and by a weld (59) along the first moulding surface (11); and/or the second portion comprises a first segment (27) and a second segment (28) joined by a mechanical fastener (58) outside the second moulding surface (21) and by a weld (59) along the second moulding surface (21).

9. The mould according to any one of the preceding claims, wherein the shell (2) comprises cavities (81) in the first moulding surface (11) and/or the second moulding surface (21); the mould (1) comprising removable inserts (82) located in the cavities (81), each insert (82) comprising an open space (83) for receiving a projecting reinforcement (93); the mould (1) comprising removable arms (84) configured to carry the inserts (82) and to be inserted, at least partially, into grooves (85) of the first moulding surface (11), and/or of the second moulding surface (12).

10. A moulding system (100) comprising a mould (1) according to any of the preceding claims, a clamping device (110), and a resin injection system (120) configured to inject a resin between the first moulding surface (11) and the second moulding surface (21).

11. A moulding method comprising heating a resin and a main reinforcement (99) in a mould (1) according to any one of claims 1 to 9, so as to mould a composite part (9), incorporating the main reinforcement (99) and resin, and of which the first part surface (91) is moulded against the first moulding surface (11) and the second part surface (92) is moulded against the second moulding surface (21), while the resin is injected between the first moulding surface (11) and the second moulding surface (21), and pressure in the first direction (501) is applied via the bearing system (3).

12. The method according to the preceding claim, wherein the part (9) comprises an aircraft wing panel, an aircraft empennage, an aircraft fuselage panel, an aircraft wing flap, an aircraft fairing or an aircraft engine part.

13. The method according to claim 11 or 12, wherein the mould (1) is a mould according to claim 9, the method comprising, prior to the resin injection, inserting the inserts (82) into the cavities (81) and inserting the projecting reinforcements (93) into the open spaces (83), so that the projecting reinforcements (93), the main reinforcement (99) and the resin are united by the moulding so as to form the part (9).

14. The method according to the preceding claim, wherein the shell (2) is at a temperature above 40°C at the time of the insertion of the inserts (82) into the cavities (81).

15. The method according to any one of claims 11 to 14, in which the heating takes place during:
• a period during which the pressure in the first direction (501) is uniform over the entire shell (2), and
• at least one other period during which the pressure in the first direction (501) on a central shell zone (2) is different from the pressure on a peripheral shell zone (2).
